Europäisches Patentamt

European Patent Office

Office européen des brevets

(19)

(11) Veröffentlichungsnummer: **0 352 438 B1**

(12) # EUROPÄISCHE PATENTSCHRIFT

(45) Veröffentlichungstag der Patentschrift:
08.05.91 Patentblatt 91/19

(51) Int. Cl.$^5$: **F16L 3/12**

(21) Anmeldenummer: **89109803.0**

(22) Anmeldetag: **31.05.89**

(54) **Rohrschelle.**

(30) Priorität: **18.07.88 CH 2740/88**

(43) Veröffentlichungstag der Anmeldung:
**31.01.90 Patentblatt 90/05**

(45) Bekanntmachung des Hinweises auf die
Patenterteilung:
**08.05.91 Patentblatt 91/19**

(84) Benannte Vertragsstaaten:
**AT BE CH DE ES FR GB GR IT LI NL SE**

(56) Entgegenhaltungen:
**WO-A-85/03493**
**GB-A- 2 162 416**
**US-A- 3 266 109**

(73) Patentinhaber: **Egli, Fischer & Co. AG**
**Gotthardstrasse 6 Claridenhof**
**CH-8022 Zürich (CH)**

(72) Erfinder: **Freier, Fred**
**Hinterer Engelstein 5**
**CH-8344 Bäretswil (CH)**

(74) Vertreter: **Patentanwälte Schaad, Balass &**
**Partner**
**Dufourstrasse 101 Postfach**
**CH-8034 Zürich (CH)**

EP 0 352 438 B1

## Beschreibung

Die vorliegende Erfindung betrifft eine Rohrschelle gemäss dem Oberbegriff des Anspruchs 1.

Eine solche Rohrschelle ist aus der CH-A-643 338 bekannt. Am einen Bridensegment dieser Rohrschelle ist eine Aussenverzahnung mit einem Zahn vorgesehen, während das andere Bridensegment eine Innenverzahnung mit zwei Zähnen trägt. Eine solche Ausbildung des Verschlusses ermöglicht somit das Festklemmen von Rohren zweier verschiedener Grössen. Für die Aufnahme von weiteren Rohrgrössen könnte durchaus die Innenverzahnung dieser bekannten Rohrschelle erweitert werden. Bei grossen Rohre bildet sich somit zwischen dem Rohr und dem nicht benützten Teil der Innenverzahnung ein Hohlraum, wodurch das Rohr nicht mehr satt anliegend umschlossen ist. Das Tragverhalten dieser bekannten Rohrschelle ist somit bezüglich einer Mittelebene in Längsrichtung des Rohres ungleich. Dies kann auch dazu führen, dass bei grossen Querkräften die Verzahnungen nur mit Schwierigkeiten sauber in Eingriff gelangen können.

Es ist daher Aufgabe der vorliegenden Erfindung, eine Rohrschelle vorzuschlagen, deren Verschluss diese Nachteile nicht mehr aufweist.

Diese Aufgabe wird durch die Merkmale des kennzeichnenden Teiles des Anspruches 1 gelöst. Der Verschluss ist dadurch in zwei nebeneinander angeordnete, gegengleiche Verschlussteile unterteilt, welche zu einer mittig auf den Befestigungsteil senkrecht stehenden Achse symmetrisch sind.

Bei einer Ausführungsform gemäss Anspruch 2, kann die Flächenpressung der einzelnen Zähne auch bei kleinen geometrischen Abmessungen des Verschlusses so gering gehalten werden, dass ein Fliessen des Kunststoffes vermieden werden kann.

Bei einer besonders bevorzugten Ausführungsform gemäss Anspruch 3 wird das einhändige und insbesondere mutwillige Oeffnen der Rohrschelle vermieden, indem keine Angriffspunkte für Hilfsmittel wie Schraubendreher oder Münzen vorhanden sind. Der Verschluss kann somit nur mit Spezialwerkzeugen problemlos geöffnet werden, was die Sicherheit von Rohranlagen erheblich steigert.

Bei einer Ausführungsform gemäss Anspruch 4 können die miteinander in Eingriff stehenden Verschlusszungen in Querrichtung zu ihrer Längserstreckung nicht soweit gegeneinander verschoben werden, dass die Verzahnungen ausser Eingriff gelangen können. Diese verhindert insbesondere ein Oeffnen des Verschlusses, wenn das Rohr um eine senkrecht auf dem Befestigungsteil stehende Achse verschwenkt wird.

Weitere bevorzugte Ausführungsformen der Rohrschelle sind in den weiteren abhängigen Ansprüchen angegeben.

Ein Ausführungsbeispiel wird nachstehend anhand der Figuren näher erläutert. Es zeigt rein schematisch :

Fig. 1 und 2 in Ansicht bzw. Draufsicht eine erfindungsgemässe Rohrschelle ;

Fig. 3 in Ansicht die Rohrschelle von Fig. 1 und 2, in welche ein Rohr eingelegt wird ; und

Fig. 4 in Ansicht die Rohrschelle von Fig. 1 und 2 mit eingelegtem Rohr.

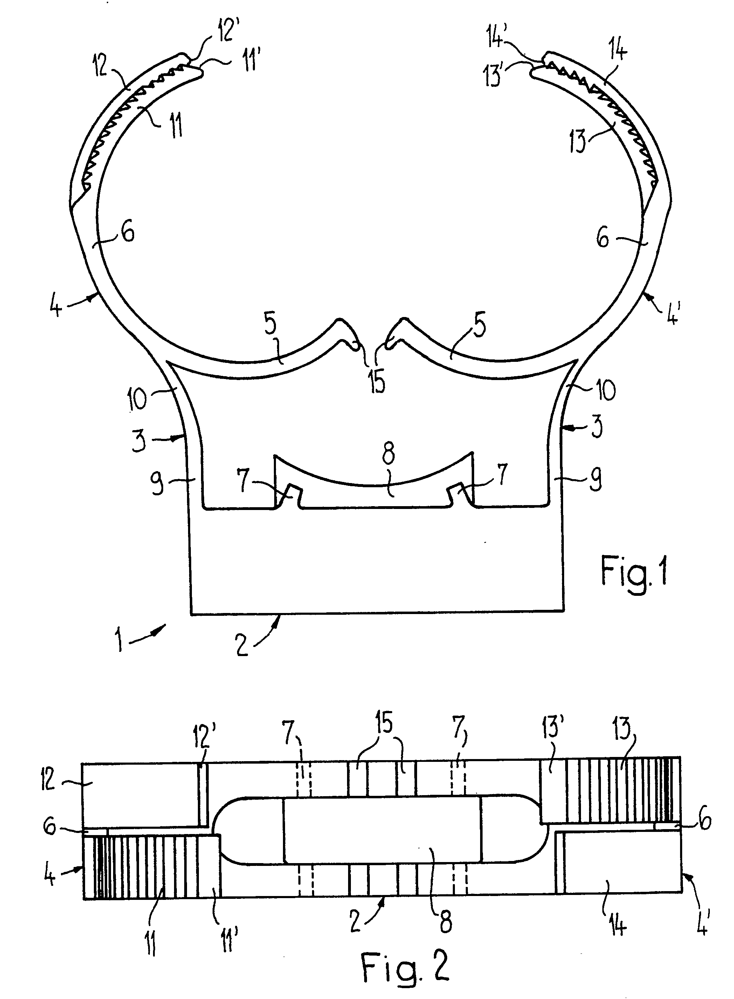

Die in Fig. 1 und 2 dargestellte Rohrschelle besitzt einen gesamthaft mit 1 bezeichneten Befestigungsteil mit einer Sockelplatte 2, an welcher Verbindungsstreben 3 zu beiden Seiten angeordnet sind. Die von der Sockelplatte 2 abgewandten Enden der Verbindungsstreben 3 gehen in Bridensegmente 4, 4' über und teilen diese dadurch in einen inneren Endabschnitt 5 und einen äusseren Endabschnitt 6.

Die Sockelplatte 2 ist mit Anschlagnocken 7 und einem Widerlager 8 versehen, deren Funktion weiter unten in Zusammenhang mit dem Einlegen eines Rohrs näher erläutert wird.

Die Verbindungsstreben 3 sind in der Art einer Blattfeder biegsam ausgebildet und greifen mit ihren Enden sowohl an der Sockelplatte 2 wie auch an den Bridensegmenten 4, 4' starr an, was zur Folge hat, dass die Bridensegmente 4, 4' nur soweit bewegbar sind, als dies die Verformbarkeit der Verbindungsstreben 3 erlaubt. Dabei sind letztere in einem an die Sockelplatte 2 anschliessenden Abschnitt 9 versteift, so dass sie trotz ihrer schlanken Konstruktion nicht zum Knicken oder Ausbeulen neigen. Weiter besitzen die Verbindungsstreben 3 nach aussen gekrümmte Abschnitte 10, so dass die Bridensegmente 4, 4' V-förmig in Offenstellung verharren und damit ein Rohr zwischen den V-förmig auseinandergespreizten Bridensegmenten 4, 4' hindurchgeführt und zwischen diese gebracht werden kann.

Jeder äussere Endabschnitt 6 läuft in zwei parallelen Verschlusszungen 11, 12 und 13, 14 aus, welche abwechselnd mit einer sägezahnartigen Aussen- bzw. Innenverzahnung versehen sind, um je mit der gegenüberliegenden, gegengleich ausgebildeten Verschlusszunge 11, 14 bzw. 12, 13 auf an sich bekannte Weise zum Eingriff und damit in Verriegelungslage zu gelangen. Dabei besitzen die mit einer Aussenverzahnung versehenen Verschlusszungen 11, 13 ein längeres Zahnfeld, um einen verschiedenen Rohrdurchmessern genügenden Eingriffsbereich des Verschlusses zu gewährleisten. Die freien Enden der Verschlusszungen 11, 12, 13, 14 sind paarweise mit gegengleichen Anschrägungen 11', 12', 13', 14' versehen, was das richtige Uebereinandergleiten der zusammenwirkenden Verschlusszungen 11, 14 bzw. 12, 13 erleichtert.

Die inneren Endabschnitte 5 besitzen Haken 15 zum Angreifen an den Anschlagnocken 7, so dass gewisse Ueberbelastungen der Verbindungsstreben 3 bei extrem grossen Seitenkräften verhindert werden können ; weiter sind sie stärker gekrümmt und etwas steifer ausgebildet als die äusseren Endabschnitte 6, was dazu führt, dass sie unter der Beanspruchung eines eingelegten Rohrs nur nachgeben, um sich an dessen Kontur anzupassen.

Die inneren Endabschnitte 5 sind gabelförmig ausgebildet, so dass ein Werkzeug von aussen her an im Befestigungsteil 1 angreifenden Befestigungselementen wie Schrauben etc. angesetzt werden kann.

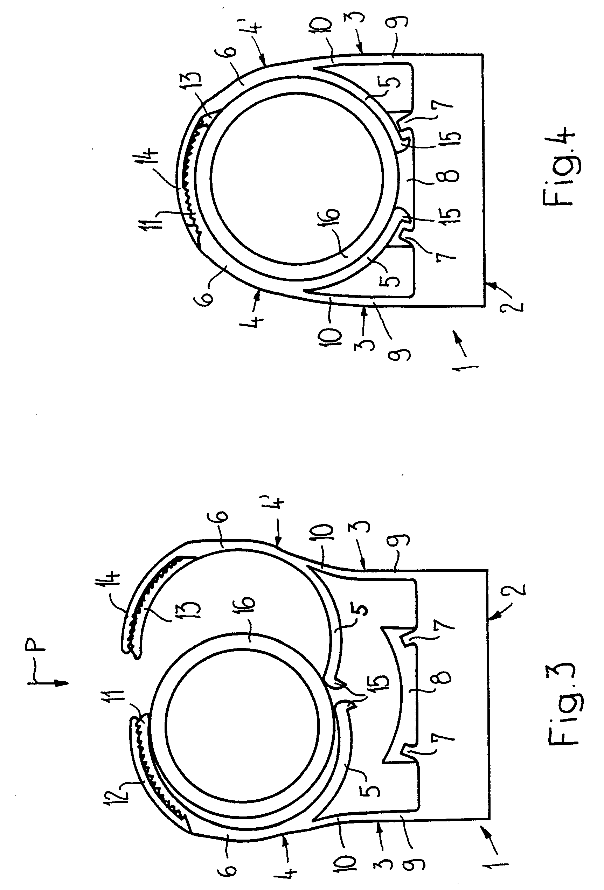

Fig. 3 zeigt die Verhältnisse beim Einlegen eines Rohrs 16 in die Schelle. Das Rohr 16, welches in Richtung des Pfeils P in die Schelle eingedrückt wird, übt auf die Endabschnitte 5 eine gegen das Befestigungsteil 1 gerichtete Kraft aus, was zur Folge hat, dass auf die weiter aussen gehaltenen Bridensegmente 4, 4' ein Moment wirkt. Da nun die Verbindungsstreben 3 starr an den Bridensegmenten 4, 4' angreifen, wird ein Biegemoment in sie eingeleitet und bewirkt deren Deformation, mit der Konsequenz, dass sie sich einwärts, d.h. in Schliessrichtung biegen. Damit wandern die Halterungspunkte, an welchen die Verbindungsstreben 3 in die Bridensegmente 4, 4' übergehen, nach innen, d.h. gegeneinander, was wiederum bedeutet, dass die Bridensegmente 4, 4' sich durch die Schwenkbewegung aus der V-Stellung aufrichten und in einer zangenförmigen Bewegung einander annähern, um so das Rohr 16 mehr und mehr zwischen sich gefangen zu nehmen. Diese Bewegung wird durch die stärkere Krümmung und steifere Ausbildung der inneren Endabschnitte 6 zusätzlich unterstützt.

In Fig. 3 ist der Fall gezeigt, in welchem zusätzlich Seitenkräfte wirken, so dass das Rohr 16 seitlich gegen das Bridensegment 4 versetzt ist, wie es in der Praxis bei schweren und unhandlichen Rohren 16 leicht vorkommt. Die gegen den Befestigungsteil 1 gerichtete Montagekraft hat aber bewirkt, dass sich das Bridensegment 4, wie oben beschrieben, aufrichtet und so das Rohr 16 den Seitenkräften entgegen in das Innere der Rohrschelle führt. Damit werden wiederum die inneren Endabschnitte 5 durch das Rohr 16 mehr und mehr in gleichem Mass niedergedrückt, was dazu führt, dass sich die Verschlusszungen 11, 12, 13, 14 auf gleicher Höhe und auf halbem Weg zueinander begegnen, womit die Verriegelungsbereitschaftsstellung erreicht ist. Da der Krümmungsradius der Bridensegmente 4, 4' kleiner ist als der Radius des zu umfassenden Rohres 16, wird dieses mit Vorspannung umfasst und die freien Enden der Verschlusszungen 11, 12, 13, 14 liegen satt am Rohr 16 an. Wird das Rohr 16 nur geringfügig weiter in die Rohrschelle eingedrückt, erfolgt dann die Verriegelung zuverlässig sicher. Dabei unterstützt der durch die Verschlusszungenpaare 11, 14 bzw. 12, 13 doppelt ausgebildete Verschluss die Zuverlässigkeit der Verriegelung, der Verschluss öffnet sich nicht mehr, auch wenn das Rohr 16 nach dem ersten Einrasten des Verschlusses von den Bridensegmenten 4, 4' vorerst nur lose umfasst ist und durch seine Bewegungen die Verriegelung belasten kann.

Fig. 4 zeigt die Rohrschelle mit eingesetztem Rohr 16. Die oberen Endabschnitte 6 bilden mit den Verschlusszungen 11, 12, 13, 14 eine Schlaufe, welche das Rohr 16 einschliesst. Zum Schutz gegen übermässige, auf das Rohr 16 wirkende Kräfte dienen das Widerlager 8 und die Anschlagnocken 7, welche die Endabschnitte 5 und mittelbar die Verbindungsstreben 3 vor Ueberdehnung schützen.

Da in verriegelter Lage jeweils mehrere Zähne der Verzahnungen aneinander anliegen, wird die Flächenpressung kleingehalten, so dass ein Fliessen des Kunststoffes auch bei erheblichen Belastungen, wie diese bei Vibrationen oder pulsartigen Krafteinwirkungen auftreten können, vermieden werden kann.

Es ist zu beachten, dass die Anschrägungen 12', 14' bei ineinandergreifenden Verzahnungen jeweils an einer flachen Zahnflanke der Verschlusszunge 11, 13 des anderen Bridensegmentes 4, 4' anliegen und nicht über die nächstfolgende steile Zahnflanke vorstehen. Dadurch kann ein mutwilliges, insbesondere einhändiges Oeffnen des Verschlusses, z.B. mit Schraubendrehern oder Münzen vermieden werden, weil keine Angriffsflächen für diese Hilfsmittel vorhanden sind. Weiter wird ein mutwilliges Oeffnen des Verschlusses der Rohrschelle dadurch erschwert, dass infolge des geringen seitlichen Abstandes der Verschlusszungen diese in Querrichtung nicht soweit gegeneinander verschoben werden können, bis die Verzahnungen ausser Eingriff geraten. Die Verschlusszungen können auch an den Bridensegmenten einer, beispielsweise aus der CH-A-643 338 bekannten Rohrschelle vorgesehen sein, bei der die Bridensegmente je mittels eines zwischen dem vom Befestigungsteil entfernten äusseren und einem diesem nahegelegenen inneren Endabschnitt angreifenden Scharniers verankert sind.

**Ansprüche**

1. Rohrschelle mit zwei an einem Befestigungsteil angeordneten Bridensegmenten zum Umgreifen eines von der Rohrschelle festzuhaltenden Rohres, die an ihren vom Befestigungsteil entfernten äusseren Endabschnitten Verzahnungen eines einrastbaren Verschlusses aufweisen, dadurch gekennzeichnet, dass jeder äussere Endabschnitt (6) im Bereich des Verschlusses in Längsrichtung in im wesentlichen parallele Verschlusszungen (11, 12; 13, 14) ausläuft, welcher abwechselnd mit einer Aussen- und einer Innenverzahnung versehen sind, um je mit der gegenüberliegenden, gegengleich ausgebildeten Verschlusszunge (11, 14; 12, 13) zum Eingriff zu gelangen.

2. Rohrschelle nach Anspruch 1, dadurch gekennzeichnet, dass an jedem Endabschnitt (6) zwei Verschlusszungen (11, 12 ; 13, 14) mit mehrteiliger Verzahnung vorgesehen sind, wobei vorzugsweise die Aussenverzahnung jeweils mehr Zähne aufweist als die Innenverzahnung.

3. Rohrschelle nach Anspruch 1 oder 2, dadurch gekennzeichnet, dass jede Verschlusszunge (12, 14) mit Innenverzahnung an ihrem freien Ende eine Anschrägung (12', 14') aufweist, welche bei verschlossener Rohrschelle an einer Zahnflanke der Aussenverzahnung der entsprechenden Verschlusszunge (13, 11) am jeweils anderen Bridensegment (4, 4') zur Anlage bringbar ist und diese Anschrägung (12', 14') kürzer oder gleich lang ist wie diese Zahnflanke.

4. Rohrschelle nach einem der Ansprüch 1-3, dadurch gekennzeichnet, dass der gegenseitige Abstand der an je dem Bridensegment (4, 4') vorgesehenen Verschlusszungen (11, 12 ; 13, 14) kleiner ist als die Breite der Verschlusszungen (11, 12, 13, 14) am jeweils anderen Bridensegment (4', 4).

5. Rohrschelle nach einem der Ansprüche 1-4, dadurch gekennzeichnet, dass die Verschlusszungen (11, 12, 13, 14) mittels je einer, an den Bridensegmenten (4, 4') zwischen deren vom Befestigungsteil (1) entfernten äusseren und diesem nahegelegenen inneren Endabschnitten (5 ; 6) starr angreifenden, in Schliessrichtung biegbar ausgebildeten und ebenfalls am Befestigungsteil (1) starr verankerten Verbindungsstrebe (3) in einer Offenstellung mit nebeneinanderliegenden inneren Abschnitten (5) und voneinander weiter entfernten Verschlusszungen (11, 12, 13, 14) gehalten und durch Kraftausübung (P) auf die inneren Endabschnitte (5) über eine Verriegelungsbereitschaftsstellung in die verriegelte Lage bringbar sind.

6. Rohrschelle nach Anspruch 5, dadurch gekennzeichnet, dass der grösste Krümmungsradius der Bridensegmente (4, 4') kleiner ist als der Radius des kleinsten zu umfassenden Rohres (16).

7. Rohrschelle nach einem der Ansprüche 5 oder 6, dadurch gekennzeichnet, dass alle Verschlusszungen (11, 12, 13, 14) an ihren Enden Anschrägungen (11', 12', 13', 14') aufweisen, um die jeweils mit einer Innenverzahnung versehenen Verschlusszungen (12, 14), beim Überführen der Bridensegmente (4, 4') aus der Verriegelungsbereitschaftsstellung in die verriegelte Lage, auf die mit der Aussenverzahnung versehenen Verschlusszungen (13, 11) zu leiten.

8. Rohrschelle nach einem der Ansprüche 1-4, dadurch gekennzeichnet, dass die Bridensegmente je mittels eines zwischen dem vom Befestigungsteil entfernten äusseren und einem diesem nahegelegenen inneren Endabschnitt angreifenden Scharniers am Befestigungsteil verankert sind und die am äusseren Endabschnitt vorgesehenen Verschlusszungen durch Kraftausübung auf die inneren Endabschnitte miteinander in Eingriff bringbar sind.

## Claims

1. A pipe clip with two clip segments disposed on a fixing member, for engaging around a pipe which is to be held fast by the pipe clip and which have at their outer end portions which are remote from the fixing member teeth of a snap-in closure member, characterised in that each outer end portion (6) terminates in the region of the closure member in a longitudinal direction in substantially parallel closure tongues(11, 12 ; 13, 14), the said closure tongues being provided alternately with outer and inner teeth so that each is able to engage the oppositely disposed matchingly constructed closure tongue (11, 14 ; 12, 13).

2. A pipe clip according to claim 1, characterised in that on each end portion (6) there are two closure tongues (11, 12 ; 13, 14) with multiple-part teeth, the outer teeth preferably having in each case more teeth than the inner teeth.

3. A pipe clip according to claim 1 or 2, characterised in that each closure tongue (12, 14) with inner teeth has at its free end a chamfer (12', 14') which, when the pipe clip is closed, can be brought to bear on a tooth flank of the outer teeth of the corresponding closure tongue (13, 11) on whichever is the other clip segment (4, 4'), this chamfer (12', 14') being shorter than or the same length as the said tooth flank.

4. A pipe clip according to one of claims 1 to 3, characterised in that the gap between the closure tongues (11, 12 ; 13, 14) provided on each clip segment (4, 4') is smaller than the width of the closure tongues (11, 12 ; 13, 14) on whichever is the other clip segment (4', 4).

5. A pipe clip according to one of claims 1 to 4, characterised in that the closure tongues (11, 12 ; 13, 14) are held in an open position with adjacently disposed inner portions (5 ; 6) and with closure tongues (11, 12 ; 13, 14) farther remote from one another by means of respective connecting struts (3) constructed to be flexible in the direction of closure and being rigidly anchored on the fixing member (1) and rigidly engaging the clip segments (4, 4') between their outer end portions (6) which are remote from the fixing member (1) and their inner end portions (5) which are close to it, and being capable by the exertion of force (P) on the inner end portions (5), of being moved into the locked position by a prepare-to-lock position.

6. A pipe clip according to claim 5, characterised in that the greatest radius of curvature of the clip segments (4, 4') is smaller than the radius of the smallest pipe (16) which is to be enclosed.

7. A pipe clip according to one of claims 5 or 6, characterised in that all closure tongues (11, 12 ; 13, 14) have at their ends chamfers (11', 12' ; 13', 14') for guiding those closure tongues (12, 14) which have teeth on the inside, when the clip segments (4, 4') are moved out of the prepare-to-lock position into the locked position onto the closure tongues (13, 11) which are provided with teeth on the outside.

8. A pipe clip according to one of claims 1 to 4, characterised in that the clip segments are each anchored on the fixing member by means of a hinge engaging between the outer end portion which is remote from the fixing member and an inner end portion which is close to it, the closure tongues provided at the outer end portion being capable of being brought into engagement with one another by the exertion of force on the inner end portions.

## Revendications

1. Collier pour tuyaux, comprenant deux segments de collier disposés sur une partie de fixation et destinés à entourer un tuyau devant être maintenu par le collier, segments qui présentent, sur leurs portions terminales extérieures, éloignées de la partie de fixation des dentures d'une fermeture encliquetable, caractérisé en ce que chaque portion terminale extérieure (6) se termine, dans la région de la fermeture, par des languettes de fermeture (11, 12 ; 13, 14) qui sont alternativement pourvues d'une denture externe et d'une denture interne afin de venir chacune en prise avec la languette de fermeture (11, 14 ; 12, 13) située à l'opposé d'elle et ayant une conformation complémentaire.

2. Collier pour tuyaux selon la revendication 1, caractérisé en ce que chaque portion terminale (6) est pourvue de deux languettes de fermeture (11, 12 ; 13, 14) avec une denture en plusieurs parties, chaque denture externe possédant de préférence plus de dents que la denture interne.

3. Collier pour tuyaux selon la revendication 1 ou 3, caractérisé en ce que chaque languette de fermeture (12, 14) à denture interne présente à son extrémité libre un biseau (12', 14') qui, à la fermeture du collier, peut être appliqué contre un flanc de dent de la denture externe de la languette de fermeture (13, 11) correspondante de l'autre segment de collier (4, 4'), ce biseau (12', 14') étant plus court ou ayant la même longueur que ce flanc de dent.

4. Collier pour tuyaux selon une des revendications 1-3, caractérisé en ce que la distance qui sépare les languettes de fermeture (11 ; 12 ; 13, 14) prévues sur chaque segment de collier (4, 4'), est plus petite que la largeur des languettes de fermeture (11, 12, 13, 14) sur l'autre segment de collier (4', 4).

5. Collier pour tuyaux selon une des revendications 1-4, caractérisé en ce que les languettes de fermeture (11, 12, 13, 14) sont normalement maintenues chacune à une position d'ouverture par une entretoise de liaison (3) qui attaque rigidement le segment de collier (4, 4') correspondant entre la portion terminale extérieure (6) de ce segment, laquelle est éloignée de la partie de fixation (1), et sa portion terminale intérieure (5) située près de cette partie, l'entretoise de liaison (3) étant flexible dans le sens de la fermeture et étant également ancrée rigidement sur la partie de fixation (1), position d'ouverture où les portions intérieures (5) sont situées l'une à côté de l'autre et les languettes de fermeture (11, 12, 13, 14) sont maintenues plus éloignées l'une de l'autre, les languettes de fermetures (11, 12, 13, 14) pouvant être amenées à la position verrouillée, en passant par une position où le collier est prêt à être verrouillé, par application d'une force (P) sur les portions terminales intérieures (5).

6. Collier pour tuyaux selon la revendication 5, caractérisé en ce que le rayon de courbure maximal des segments de collier (4, 4') est plus petit que le rayon du plus mince tuyau (16) à entourer.

7. Collier pour tuyaux selon la revendication 5 ou 6, caractérisé en ce que toutes les languettes de fermeture (11, 12, 13, 14) présenten des biseaux (11', 12', 13', 14') à leurs extrémités pour guider les languettes de fermetur (12, 14) pourvues d'une denture interne, de manière qu'elles glissent sur les languettes de fermeture (13, 11) pourvues de la denture externe lorsque les segments de collier (4, 4') sont amenés de la position où le collier est prêt à être verrouillé à la position verrouillée.

8. Collier pour tuyaux selon une des revendications 1-4, caractérisé en ce que les segments de collier sont ancrés chacun à la partie de fixation au moyen d'une charnière en prise entre la portion terminale extérieure, éloignée de la partie de fixation et une portion terminale intérieure située près de cette partie, et en ce que les languettes de fermeture, prévues sur les portions terminales extérieures, peuvent être amenées en prise l'une avec l'autre par l'application d'une force aux portions terminales intérieures.

Fig. 1

Fig. 2

Fig.4

Fig.3